# EUROPEAN PATENT SPECIFICATION

(11) **EP 2 871 085 B1**
(45) Date of publication and mention of the grant of the patent: **09.01.2019**
(21) Application number: 13191906.0
(22) Date of filing: 07.11.2013
(51) Int. Cl.: B60J 1/20, B60J 7/00

(54) **Rollo assembly**
Rolloanordnung
Ensemble formant rouleau

(43) Date of publication of application: 13.05.2015
(73) Proprietor: Inalfa Roof Systems Group B.V., 5804 AB Venray (NL)
(72) Inventor: Van Rooij, Theodorus Gerardus Franciscus, 5804 VK Venray (NL); Coiffard, Etienne Philippe Marcel André, 47574 Goch (DE)
(74) Representative: De Vries & Metman

(56) References cited:
- EP-A1- 1 566 295
- EP-A1- 1 566 297
- EP-A1- 2 003 004
- EP-A2- 1 769 957
- FR-A1- 2 897 633
- FR-A1- 2 959 452

## Description

The present invention relates to a rollo assembly according to the preamble of claim 1.

Such a rollo assembly is known from FR-A-2959452.

Due to the fact that said cloth parts do extend into the stiffener not in line with the remainder of the cloth (thus not defining a single planar plane therewith), the coherence between the cloth parts and the stiffener(s) is improved, thus creating a strong connection between these members. Further injection moulding is a rather low cost technique which does not require any finishing steps. The stiffener is effective in keeping the tension across the cloth at a constant level and may avoid the need for side guides for the cloth.

It is an object of the present invention to provide an improved rollo assembly of this type.

Thus, in accordance with the present invention, the rollo assembly is characterized as set forth in claim 1.

In one embodiment the stiffener is injection moulded to said cloth parts only (and thus not to the remaining parts of the cloth). This may promote a proper winding of the combination of cloth and stiffener(s) onto the winding shaft.

Further it is possible that the cloth parts, as seen in a longitudinal cross section of the cloth, extend substantially rectilinearly and each include an angle with the remainder of the cloth of at least 45°. Such an angle further may optimize the coherence between the cloth parts and the stiffener.

It is noted that such an angle can be defined as the virtual angle over which such a cloth part should be rotated (starting from a position in line with the remainder of the cloth) for arriving at its present position. Thus when, for example, one cloth part includes an angle of 45° and the other an angle of 135° with the remainder of the cloth, both cloth parts will extend in parallel to each other.

In a special embodiment of the rollo assembly, the cloth parts each extend substantially perpendicularly to the remainder of the cloth (that means that for both cloth parts said angle is 90°).

In one embodiment of the rollo assembly according to the present invention, both cloth parts are integrally interconnected for defining a single continuous cloth. Basically this means that the cloth extends uninterrupted over its entire length, including the cloth parts (without a visible seam in the cloth). The cloth parts are defined based upon their orientation which differs from the orientation of the remainder of the cloth (because the cloth parts, as stated previously) do not extend in line with the remainder of the cloth).

As an alternative, however, the cloth parts may be parts of two separate cloths which are interconnected in one way or another (which way may be an interconnection caused exclusively by the stiffeners or an interconnection caused by other means in addition to the stiffeners). This allows the use of cloths with differing characteristics, such as different colors or different cloth materials.

When the cloth parts indeed are parts of two separate cloths, said cloth parts may be joined by a single stiffener. As an alternative, however, it is possible that each cloth part has moulded thereto a separate stiffener, wherein the separate stiffeners are provided with cooperating locking members for interconnecting the separate stiffeners for defining a combined stiffener. The separate stiffeners each may be moulded to the respective cloth part independently, where after both separate stiffeners are brought together for forming the combined, complete stiffener while joining the cloth parts.

In yet another embodiment of the rollo assembly according to the present invention, the stiffener comprises at least two stiffener parts, of which a first stiffener part is moulded to the cloth parts and of which the second stiffener part is connected to the first stiffener part by means of cooperating locking members on both stiffener parts. Such an embodiment increases the possibilities with respect to offering the complete stiffener (first and second stiffener part combined) a desired shape.

The stiffener may come in many different forms. For example, the stiffener may have an upper surface and a lower surface each with a straight, concave or convex shape.

In one embodiment of the rollo assembly according to the present invention the cloth parts at least partly are provided with a blocking material for preventing an unwanted migration of the plastic material of the stiffener during moulding. As an alternative, however, it is possible too that the cloth parts comprise openings for the migration of the material of the stiffener during moulding. Both embodiments may be helpful in defining the locations where such material will accumulate during the manufacture of the rollo assembly.

It is conceivable that said material is provided on the faces of the cloth parts facing each other and/or on the faces of the cloth parts facing away from each other, depending, among others, on the position of the stiffener (above or below the cloth parts).

The stiffener may be provided with at least one reinforcement member, such as a metal member extending in the longitudinal direction of the stiffener and at least partially embedded in the stiffener. Such reinforcement members may be used to define mechanical characteristics of the stiffener, but also may be used to keep the cloth (or cloth parts) in a desired position while injection moulding the stiffener.

When the rollo assembly is intended for use in combination with a curved part, such as a curved interior of a roof of a vehicle, the stiffener in its lengthwise direction (widthwise direction of the cloth) may define a curved shape, preferably un upwardly curved shape. As a result, the cloth may closely follow the inner contour of such a roof.

The stiffener may have two opposite ends provided with slide shoes for cooperation with guide rails extending alongside opposite transverse edges of the cloth. Such guide rails may already be present for guiding an operation beam at a leading end of the cloth, as is known per se, or may be guide rails uniquely provided for said guide shoes. The guide shoes and guide rails in a very effective manner define the position of the stiffeners and thus the position of the cloth (of which, further, the shape in the transverse -widthwise- direction of the cloth is defined by the shape of the stiffeners).

The slide shoes may be integral parts of the stiffener (and thus formed during the injection moulding process, for example using a 2K moulding technique for achieving slide shoes made of a different plastic material compared to the plastic material of the stiffener), but it is also conceivable that the slide shoes are manufactured as separate parts which are connected to the stiffener afterwards.

Hereinafter the invention will be elucidated while referring to the drawing, in which:
Figure 1 shows a perspective view of a rollo assembly according to the present invention as provided in an open roof construction for a vehicle;
Figure 2 illustrates a first embodiment of a stiffener in a cross section according to A-A in figure 1;
Figures 3a and 3b illustrate a second embodiment of a stiffener in a cross section according to A-A in figure 1 during assembly and in a completed state, respectively;
Figures 4a and 4b illustrate a third embodiment of a stiffener not belonging to the invention in a cross section according to A-A in figure 1 during assembly and in a completed state, respectively;
Figure 5 illustrates a fourth embodiment of a stiffener in a cross section according to A-A in figure 1;
Figure 6 illustrates a fifth embodiment of a stiffener not belonging to the invention in a cross section according to A-A in figure 1;
Figure 7 illustrates a sixth embodiment of a stiffener not belonging to the invention in a cross section according to A-A in figure 1;
Figure 8 illustrates a seventh embodiment of a stiffener not belonging to the invention in a cross section according to A-A in figure 1;
Figure 9 illustrates an eighth embodiment of a stiffener in a cross section according to A-A in figure 1;
Figure 10 shows a cross section according to B-B in figure 1, and
Figure 11 illustrates a curved stiffener in a perspective view.

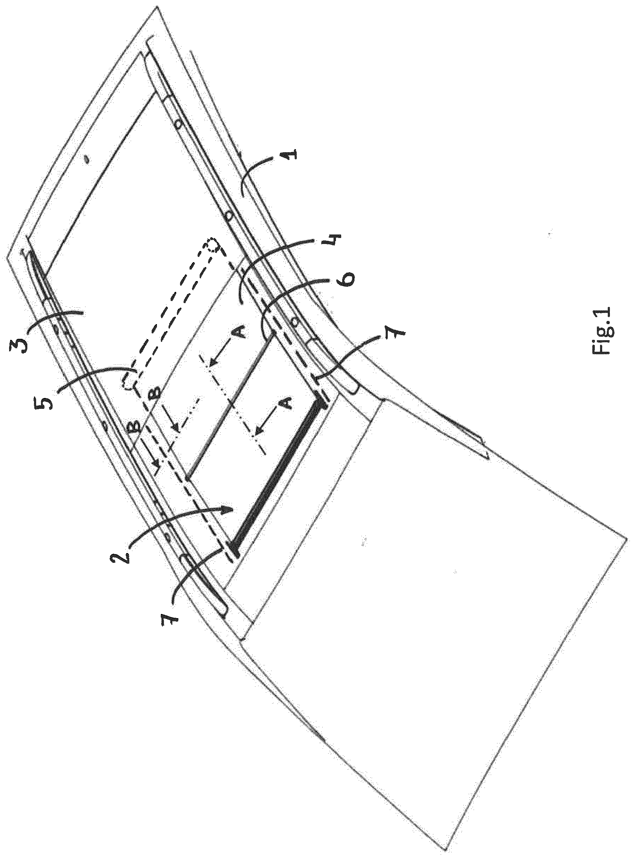

Figure 1 schematically shows part of an open roof construction of a vehicle, with a stationary roof part 1, a roof opening 2 therein and a movable panel 3 for opening or closing said roof opening. In a manner known per se and not further illustrated in detail, the movable panel is guided for a movement in longitudinal guides along opposite sides of the roof opening.

In the roof opening a rollo assembly is positioned which comprises a cloth 4 which can be wound onto or off a winding shaft 5 (only indicated schematically in dotted lines). The cloth 4 is provided with preferably one, and sometimes a number of plastic stiffeners 6 extending in a widthwise direction of the cloth 4 and injection moulded thereto. In a manner to be described later the transverse sides of the cloth 4 are directly or indirectly guided in guide rails 7.

As will appear from the following description the cloth 4 comprises at least two cloth parts 4' and 4" meeting each other at said (or each) stiffener 6, wherein each cloth part, as seen in a longitudinal cross section of the cloth, extends into the stiffener 6 not in line with the remainder of the cloth. As stated, the stiffener 6 is injection moulded to at least said cloth parts 4' and 4".

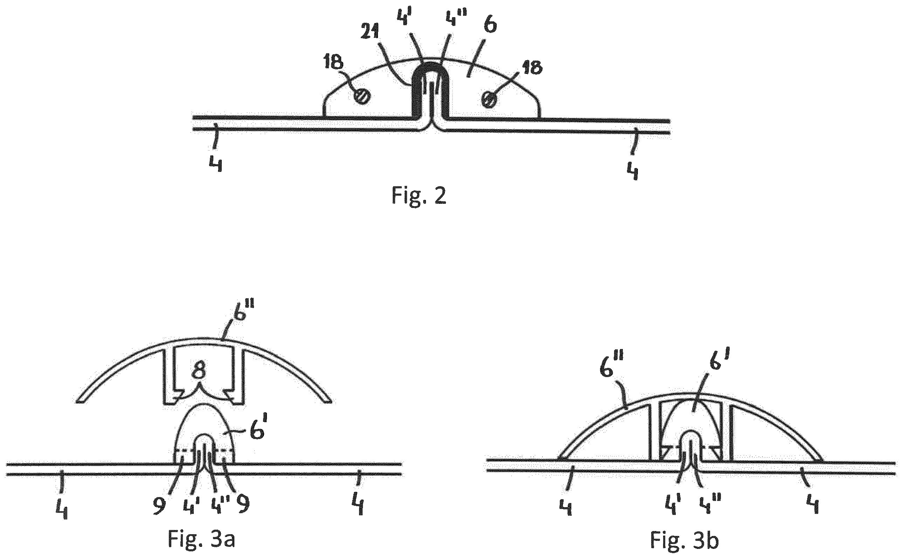

Referring to figure 2, a first embodiment is illustrated showing the cloth 4 having two cloth parts 4' and 4" which each extend substantially rectilinearly and perpendicularly to the remainder of the cloth 4. Further, in this embodiment both cloth parts 4' and 4" are integrally interconnected for defining a single continuous cloth.

The stiffener 6 in this embodiment is a one-piece part injection moulded to at least the cloth parts 4' and 4", and preferably injection moulded only to said parts and not to the remainder of the cloth 4 (such as to enable the cloth 4 to be wound closely onto the winding shaft 5).

The stiffener according to the embodiment illustrated in figures 3a and 3b comprises two stiffener parts 6' and 6", of which the first stiffener part 6' is moulded to the cloth parts 4' and 4" (figure 3a). The second stiffener part 6" thereafter is connected to the first stiffener part 6' (figure 3b) using cooperating locking members (in the illustrated embodiment hooks 8 on stiffener part 6" and recesses 9 in stiffener part 6').

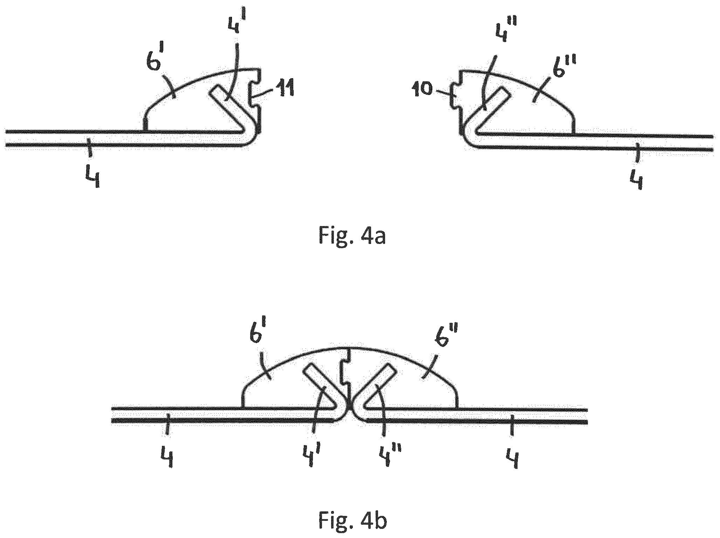

Figures 4a and 4b also show a two-part stiffener. However, in this embodiment a first separate stiffener part 6' is moulded to cloth part 4' and a second separate stiffener part 6" is moulded to cloth part 4" (figure 4a). Thereafter cooperating locking members on the stiffener parts 6' and 6" (in this embodiment a projection 10 and a correspondingly shaped opening 11) are used to interconnect the separate stiffener parts for defining a combined stiffener (figure 4b). It is possible that such an interconnection is permanent or of a type allowing a disconnect at a later stage.

It is noted, that in this embodiment the cloth parts 4' and 4" are parts of two separate cloths 4. Further, in this embodiment the cloth parts 4' and 4" extend rectilinearly at an angle with respect to the remaining cloths which differs from the situation in figure 2. Preferably, such an angle at least should be substantially 45° (wherein such an angle is defined as the angle over which a cloth part should be rotated starting from an original position in line with the remainder of the cloth 4). In the embodiment according to figure 4b both angles are about 135°, but it is also possible that both angles differ from each other (a special embodiment featuring such angles that the cloth parts 4' and 4" do not extend perpendicularly to the cloth 4 but extend in parallel to each other; in such a case the sum of both angles would be 180°). However, it is also possible that the cloth parts 4' and 4" do not extend rectilinearly but have a curved shape, as will appear below.

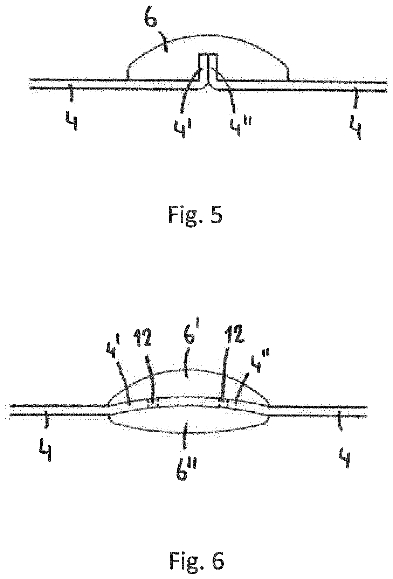

The embodiment according to figure 5 resembles the embodiment according to figure 2, with the exception that in figure 5 the cloth parts 4' and 4" are not integrally interconnected but are parts of separate cloths 4.

In figure 6 an embodiment is illustrated in which the cloth parts 4' and 4" are again integrally interconnected and together define a bow-shaped cloth section. The stiffener comprises an upper stiffener part 6' and a lower stiffener part 6" which both are injection moulded to the cloth parts 4' and 4" (above and below it, respectively). It is possible that passages 12 are provided in the cloth parts 4' and 4" through which a material connection is provided between the upper and lower stiffener parts. Such passages 12 also could be applied in other embodiments of the rollo assembly.

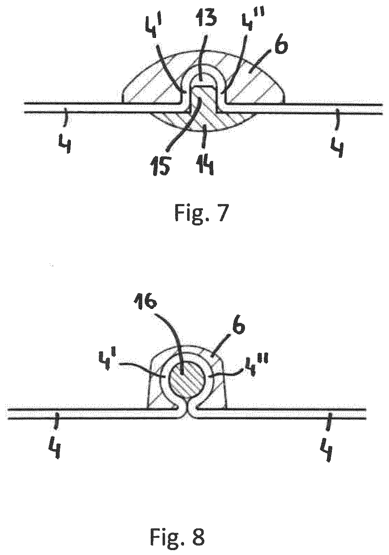

The embodiment illustrated in figure 7 features cloth parts 4' and 4" which are integrally interconnected and which there between define a downwardly open channel 13. Further a covering strip 14 is provided having a projection or contour 15 to be received in the downwardly open channel 13. Said covering strip 14 may have an aesthetical function but also may provide an additional stiffening.

In figure 8 an embodiment is illustrated in which, again, the cloth parts 4' and 4" are integrally interconnected and substantially define a circular shape with an inner cavity in which an additional stiffener part 16 (which may be made of a different material) is received. At least one of the stiffeners 6 and 16 should be injection moulded to the cloth parts. In one specific embodiment the additional stiffener part 16 is made of plastic material too and is injection moulded to the cloth parts first, and next the stiffener 6 is injection moulded to the cloth parts. The cloth parts 4' and 4" also may be permeable or have passages to allow the injection moulded plastic material to pass the cloth parts.

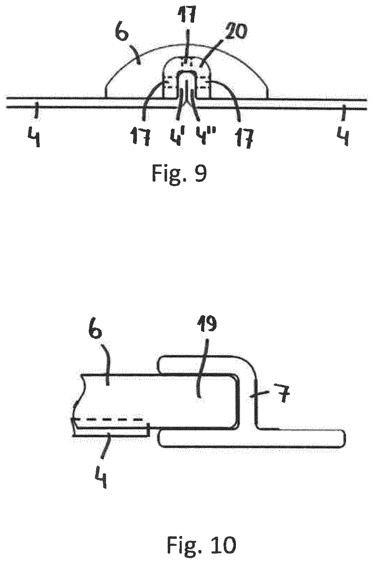

The embodiment according to figure 9 shows a stiffener 6 with core part 20 which can be made from a different material (for example a metal). The core part 20 is provided with through holes 17 allowing the stiffener 6 to be moulded to the cloth parts 4' and 4". The core part can be used to keep the cloth parts in a desired position during injection moulding (for example by being shaped as a resilient clamp clamping the cloth parts together).

It is noted that the stiffener 6 may be provided with at least one reinforcement member, such as two metal members 18 (as shown in figure 2) extending in the longitudinal direction of the stiffener 6 and at least partially embedded therein.

It has been shown in figure 2 by a thickened line 21 that the cloth parts 4' and 4" at least partly may be provided with a blocking material for preventing an unwanted migration of the plastic material of the stiffener 6 during moulding (which otherwise could stain the cloth 4). Said blocking material, for example, may be provided locally on the faces of the cloth parts 4' and 4" facing each other and/or locally on the faces of the cloth parts facing away from each other. On the other hand, it also may be advantageous in some embodiments that the cloth parts comprise openings for the migration of the plastic material of the stiffener during moulding.

Referring to figure 10 it is illustrated that the stiffeners 6 may have two opposite ends (only one being shown) provided with slide shoes 19 for cooperation with the guide rails 7 which extend alongside opposite transverse edges of the cloth 4. Although in the illustrated embodiment the cloth 4 ends at some distance from the guide 7 (and thus is indirectly guided thereby through the slide shoes 19), in another embodiment the cloth 4 also could extend into the guide 7 to be guided thereby directly. The slide shoes 19 may be integral parts of the stiffener 6 (and thus formed during the injection moulding process, for example using a 2K moulding technique for achieving slide shoes 19 made of a different plastic material compared to the plastic material of the stiffener 6), but it is also conceivable that the slide shoes 19 are manufactured as separate parts which are connected to the stiffener 6 afterwards.

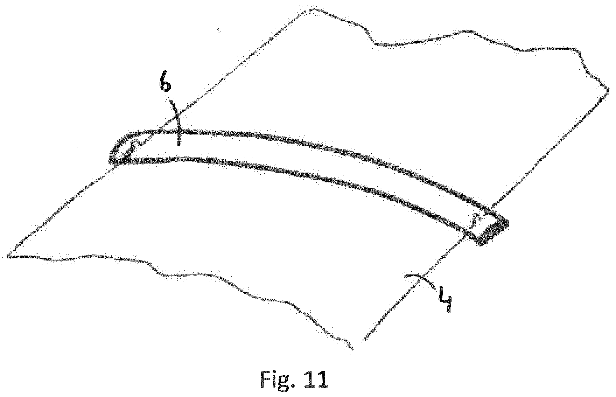

Finally figure 11 schematically shows that a stiffener 6 in its lengthwise direction (widthwise direction of the cloth 4) may define a curved shape, for example (substantially) corresponding to a curved inner shape of the roof of a vehicle.

When a cloth assembly according to the present invention is manufactured, the cloth parts 4' and 4" are positioned in a mould having a mould cavity, in such a manner that they already assume the desired final position, where after a material for defining the stiffener 6 is supplied (for example by injection moulding) into the mould cavity and into contact with at least said cloth parts.

The mould can comprise two movable mould parts for there between clamping sections of the cloth 4 adjacent the cloth parts 4' and 4" before supplying said material in the mould cavity. Further at least sections of the cloth parts adjacent the movable mould parts can be provided with a sealing material for preventing an unwanted migration of said supplied material. For example it is possible that said sealing material is supplied over the entire extent of the cloth parts.

The invention is not limited to the embodiments described before which may be varied widely within the scope of the invention as defined by the appending claims.

## Claims

1. Rollo assembly for a vehicle, comprising a winding shaft (5) and a cloth (4) which can be wound onto or off said winding shaft, which cloth is provided with at least one stiffener (6,6',6") extending in a widthwise direction of the cloth and is moulded thereto and which cloth (4) comprises at least two cloth parts (4',4") meeting each other at said stiffener (6,6',6"), wherein each cloth part, as seen in a longitudinal cross section of the cloth, extends into the stiffener not in line with the remainder of the cloth and wherein the stiffener is made of plastic material and is injection moulded to at least said cloth parts, **characterized in that** the cloth parts (4',4") extend in parallel to each other and engage each other over their full length.

2. Rollo assembly according to claim 1, wherein the stiffener (6) is injection moulded to said cloth parts (4',4") only.

3. Rollo assembly according to any of the previous claims, wherein the cloth parts (4',4"), as seen in a longitudinal cross section of the cloth (4), extend substantially rectilinearly and each include an angle with the remainder of the cloth of at least 45°.

4. Rollo assembly according to claim 3, wherein the cloth parts (4',4") each extend substantially perpendicularly to the remainder of the cloth (4).

5. Rollo assembly according to any of the previous claims, in which both cloth parts (4',4") are integrally interconnected for defining a single continuous cloth (4).

6. Rollo assembly according to any of the claims 1-4, wherein the cloth parts (4',4") are parts of two separate cloths (4) .

7. Rollo assembly according to claim 6, wherein the cloth parts (4',4") are joined by a single stiffener (6,6',6").

8. Rollo assembly according to claim 6, wherein each cloth part (4',4") has moulded thereto a separate stiffener (6', 6"), wherein the separate stiffeners are provided with cooperating locking members (10,11) for interconnecting the separate stiffeners for defining a combined stiffener.

9. Rollo assembly according to any of the claims 1-7, wherein the stiffener comprises at least two stiffener parts (6',6"), of which a first stiffener part (6') is moulded to the cloth parts (4',4") and of which the second stiffener part (6") is connected to the first stiffener part by means of cooperating locking members (8,9) on both stiffener parts.

10. Rollo assembly according to any of the previous claims, wherein the stiffener (6,6',6") has an upper surface and a lower surface each with a straight, concave or convex shape.

11. Rollo assembly according to any of the previous claims, wherein the cloth parts (4',4") comprise openings (12) for the migration of the plastic material of the stiffener during moulding.

12. Rollo assembly according to any of the previous claims, wherein the stiffener (6,6',6") is provided with at least one reinforcement member (16,18), such as a metal member extending in the longitudinal direction of the stiffener and at least partially embedded in the stiffener.

13. Rollo assembly according to any of the previous claims, wherein the stiffener (6,6',6") in its lengthwise direction defines a curved shape, preferably an upwardly curved shape.

14. Rollo assembly according to any of the previous claims, wherein the stiffener (6,6',6") has two opposite ends provided with slide shoes (19) for cooperation with guide rails (7) extending alongside opposite transverse edges of the cloth (4) .

## Patentansprüche

1. Rollo-Einrichtung für ein Fahrzeug, aufweisend eine Wickelrolle (5) und ein Tuch (4), das auf die Wickelwelle auf- oder davon abgewickelt werden kann, welches Tuch mit wenigstens einer Versteifung (6, 6', 6") versehen ist, die sich in eine Breitenrichtung des Tuchs erstreckt und daran angeformt ist, und welches Tuch (4) wenigstens zwei Tuchabschnitte (4', 4") aufweist, die sich an der Versteifung (6, 6', 6") treffen, wobei sich jeder Tuchabschnitt, wenn in einem Längsschnitt des Tuchs gesehen, nicht ausgerichtet zu dem Rest des Tuchs in die Versteifung hinein erstreckt und wobei die Versteifung aus Kunststoffmaterial gemacht ist und an wenigstens die Tuchabschnitte spritzangegossen ist, **dadurch gekennzeichnet, dass** die Tuchabschnitte (4', 4") sich parallel zueinander erstrecken und über ihre volle Länge im Eingriff miteinander sind.

2. Rollo-Einrichtung gemäß Anspruch 1, wobei die Versteifung (6) nur an die Tuchabschnitte (4', 4") spritzangegossen ist.

3. Rollo-Einrichtung gemäß irgendeinem der vorhergehenden Ansprüche, wobei sich die Tuchabschnitte (4', 4"), wenn in einem Längsschnitt des Tuchs (4) gesehen, im Wesentlichen geradlinig erstrecken und jeweils einen Winkel von wenigstens 45° mit dem Rest des Tuchs einschließen.

4. Rollo-Einrichtung gemäß Anspruch 3, wobei sich die Tuchabschnitte (4', 4") jeweils im Wesentlichen senkrecht zu dem Rest des Tuchs (4) erstrecken.

5. Rollo-Einrichtung gemäß irgendeinem der vorhergehenden Ansprüche, wobei beide Tuchabschnitte (4, 4") integral miteinander verbunden sind zum Definieren eines einzigen durchgehenden Tuchs (4).

6. Rollo-Einrichtung gemäß irgendeinem der Ansprüche 1-4, wobei die Tuchabschnitte (4', 4") Abschnitte von zwei separaten Tüchern (4) sind.

7. Rollo-Einrichtung gemäß Anspruch 6, wobei die Tuchabschnitte (4', 4") durch eine einzige Versteifung (6, 6', 6") aneinandergefügt sind.

8. Rollo-Einrichtung gemäß Anspruch 6, wobei jeder Tuchabschnitt (4', 4") eine separate Versteifung (6', 6") daran angeformt hat, wobei die separaten Versteifungen mit zusammenwirkenden Verschlusselementen (10, 11) versehen sind zum Miteinander-Verbinden der separaten Versteifungen zum Definieren eines gemeinsamen Verbinders.

9. Rollo-Einrichtung gemäß irgendeinem der Ansprüche 1-7, wobei die Versteifung aufweist wenigstens zwei Versteifungsabschnitte (6', 6"), von denen ein erster Versteifungsabschnitt (6') an die Tuchabschnitte (4', 4") angeformt ist und von denen der zweite Versteifungsabschnitt (6") mit dem ersten Versteifungsabschnitt verbunden ist mittels zusammenwirkender Verschlusselemente (8,9) an beiden Versteifungsabschnitten.

10. Rollo-Einrichtung gemäß irgendeinem der vorhergehenden Ansprüche, wobei die Versteifung (6, 6', 6") eine obere Fläche und eine untere Fläche hat, von denen jede eine gerade, konkave oder konvexe Form hat.

11. Rollo-Einrichtung gemäß irgendeinem der vorhergehenden Ansprüche, wobei die Tuchabschnitte (4', 4") Öffnungen (12) aufweisen für die Migration von Kunststoffmaterial der Versteifung während des Anformens.

12. Roll-Einrichtung gemäß irgendeinem der vorhergehenden Ansprüche, wobei die Versteifung (6, 6', 6") mit wenigstens einem Verstärkungselement (16, 18) versehen ist, wie z.B. einem Metallelement, das sich in Längsrichtung der Versteifung erstreckt und zumindest teilweise in die Versteifung eingebettet ist.

13. Rollo-Einrichtung gemäß irgendeinem der vorhergehenden Ansprüche, wobei die Versteifung (6, 6', 6") in ihrer Längsrichtung eine gekrümmte Gestalt definiert, bevorzugt eine aufwärts gekrümmte Gestalt.

14. Roll-Einrichtung gemäß irgendeinem der vorhergehenden Ansprüche, wobei die Versteifung (6, 6', 6") zwei gegenüberliegende Enden hat, die mit Gleitschuhen (19) versehen sind zum Zusammenwirken mit Führungsschienen (7), die sich längs gegenüberliegenden Querrändern des Tuchs (4) erstrecken.

## Revendications

1. Ensemble galet pour un véhicule, comprenant un arbre d'enroulement (5) et un tissu (4) qui peut être enroulé sur ledit arbre d'enroulement ou déroulé de celui-ci, lequel tissu est pourvu d'au moins un raidisseur (6, 6', 6") s'étendant dans un sens de la largeur du tissu et est moulé sur celui-ci et lequel tissu (4) comprend au moins deux parties de tissu (4', 4") se rencontrant l'une l'autre au niveau dudit raidisseur (6, 6', 6"), dans lequel chaque partie de tissu, dans une vue dans une section transversale longitudinale du tissu, s'étend dans le raidisseur ne s'alignant pas avec le restant du tissu et dans lequel le raidisseur est réalisé en matériau plastique et est moulé par injection sur au moins lesdites parties de tissu, **caractérisé en ce que** les parties de tissu (4', 4") s'étendent en parallèle l'une à l'autre et s'enclenchent l'une avec l'autre sur toute leur longueur.

2. Ensemble galet selon la revendication 1, dans lequel le raidisseur (6) est moulé par injection sur lesdites parties de tissu (4', 4") uniquement.

3. Ensemble galet selon l'une quelconque des revendications précédentes, dans lequel les parties de tissu (4', 4"), dans une vue dans une section transversale longitudinale du tissu (4), s'étendent de façon sensiblement rectiligne et forment chacune un angle avec le restant du tissu d'au moins 45°.

4. Ensemble galet selon la revendication 3, dans lequel les parties de tissu (4', 4") s'étendent chacune de façon sensiblement perpendiculaire au restant du tissu (4).

5. Ensemble galet selon l'une quelconque des revendications précédentes, dans lequel les deux parties de tissu (4', 4") sont reliées d'un seul tenant pour définir un seul tissu continu (4).

6. Ensemble galet selon l'une quelconque des revendications 1 à 4, dans lequel les parties de tissu (4', 4") sont des parties de deux tissus (4) séparés.

7. Ensemble galet selon la revendication 6, dans lequel les parties de tissu (4', 4") sont assemblées par un seul raidisseur (6, 6", 6").

8. Ensemble galet selon la revendication 6, dans lequel sur chaque partie de tissu (4', 4") est moulé un raidisseur (6', 6") séparé, dans lequel les raidisseurs séparés sont pourvus d'organes de verrouillage coopérants (10, 11) pour relier les raidisseurs séparés afin de définir un raidisseur combiné.

9. Ensemble galet selon l'une quelconque des revendications 1 à 7, dans lequel le raidisseur comprend au moins deux parties de raidisseur (6', 6"), dont une première partie de raidisseur (6') est moulée sur les parties de tissu (4', 4") et dont la seconde partie de raidisseur (6") est raccordée à la première partie de raidisseur au moyen d'organes de verrouillage coopérants (8, 9) sur les deux parties de raidisseur.

10. Ensemble galet selon l'une quelconque des revendications précédentes, dans lequel le raidisseur (6, 6', 6") a une surface supérieure et une surface inférieure ayant chacune une forme droite, concave ou convexe.

11. Ensemble galet selon l'une quelconque des revendications précédentes, dans lequel les parties de tissu (4', 4") comprennent des ouvertures (12) pour la migration du matériau plastique du raidisseur pendant le moulage.

12. Ensemble galet selon l'une quelconque des revendications précédentes, dans lequel le raidisseur (6, 6', 6") est pourvu d'au moins un organe de renforcement (16, 18), tel qu'un organe en métal s'étendant dans la direction longitudinale du raidisseur et incorporé au moins partiellement dans le raidisseur.

13. Ensemble galet selon l'une quelconque des revendications précédentes, dans lequel le raidisseur (6, 6', 6") dans son sens de la longueur définit une forme incurvée, de préférence une forme incurvée vers le haut.

14. Ensemble galet selon l'une quelconque des revendications précédentes, dans lequel le raidisseur (6, 6', 6") a deux extrémités opposées pourvues de glissières (19) pour une coopération avec des rails de guidage (7) s'étendant le long de bords transversaux opposés du tissu (4).
